Europäisches Patentamt

European Patent Office

Office européen des brevets

(19)

(11) Numéro de publication: **0 269 471
B1**

## (12) FASCICULE DE BREVET EUROPEEN

(45) Date de publication du fascicule du brevet:
**05.09.90**

(21) Numéro de dépôt: **87402273.4**

(22) Date de dépôt: **13.10.87**

(51) Int. Cl.⁵: **F16L 27/08,** F16J 15/44,
F16J 15/16

(54) **Joint hydraulique tournant annulaire à température stabilisée.**

(30) Priorité: **16.10.86 FR 8614364**

(43) Date de publication de la demande:
**01.06.88 Bulletin 88/22**

(45) Mention de la délivrance du brevet:
**05.09.90 Bulletin 90/36**

(84) Etats contractants désignés:
**DE FR GB IT**

(56) Documents cités:
**EP-A- 0 034 728
FR-A- 2 396 883
GB-A- 1 449 608
US-A- 2 477 142**

(73) Titulaire: **GAMET PRECISION, Route d'Epégard,
F-27110 Le Neubourg(FR)**

(72) Inventeur: **Le Moal, Jean-Pierre, 26, rue Yvan
Tourgueneff, F-78280 Bougival(FR)**

(74) Mandataire: **de Boisse, Louis Arnaud et al, CABINET de
BOISSE 37, Avenue Franklin D. Roosevelt,
F-75008 Paris(FR)**

ACTORUM AG

## Description

L'invention concerne un joint hydraulique tournant annulaire à température stabilisée destiné à véhiculer un fluide sous pression entre une source fixe et un récepteur tournant, ledit joint étant monté sur une partie cylindrique fixée au récepteur.

Les joints hydrauliques tournants sont dans de nombreux cas d'utilisation destinés à alimenter des broches de machines-outils ou des vérins tournants de commande de mandrin.

La partie tournante des joints doit donc présenter un alésage intérieur suffisamment grand pour admettre le passage du matériau à usiner. Il s'ensuit que cette partie tournante de diamètre important est soumise à une vitesse de rotation élevée et qu'elle présente par rapport à la partie fixe, une vitesse de défilement très élevée dans la zone devant réaliser l'étanchéité.

On ne connaît pas actuellement de joint élastique capable d'assurer une étanchéité à pression élevée (jusqu'à 5 MPa) et à vitesse de défilement importante (plus de 25 m/s).

Les joints tournants actuellement fabriqués, comme, par exemple, celui décrit dans FR-A 2 396 883, sont constitués d'un anneau statique centré à l'aide de deux paliers à roulements sur un arbre tournant, formé dans le cas d'un vérin, par un manchon tubulaire solidaire du piston du vérin. L'anneau s'ajuste sur l'arbre avec un jeu réduit qui permet la rotation de l'arbre sans contact avec l'anneau. Le fluide sous pression est amené dans les gorges pratiquées dans l'anneau. A l'aplomb de chaque gorge débouche une canalisation forée dans l'arbre. Le fluide peut ainsi passer de l'anneau statique à l'arbre tournant et alimenter les dispositifs portés par l'arbre. Un dispositif à tiroir prévu en amont de l'anneau statique permet d'inverser le sens de passage du fluide dans les canalisations de l'arbre tournant.

L'étanchéité entre chaque gorge et le palier est assurée partiellement par le jeu réduit entre l'arbre et l'anneau. En fait, une certaine quantité de fluide passe par le palier et le débit D du fluide, fonction de plusieurs facteurs, est donné par la formule suivante :

$$D = f\left(Pg\,\eta\,\frac{E^3}{L}\right)$$

dans laquelle Pg est la pression du fluide dans la gorge, $\eta$ la viscosité dynamique, E le jeu, L la distance entre chaque gorge.

Dès que l'arbre tourne, le fluide qui s'était infiltré, par suite de la pression dans les zones de jeu existant entre les gorges, est soumis à un frottement important qui provoque un échauffement de tout l'ensemble. La quantité Q de chaleur ainsi produite est fonction d'un certain nombre de paramètres:

$$Q = f\left(\frac{\omega^2\cdot A\cdot L\cdot \eta}{E}\right)\ \overline{\omega}$$

étant la vitesse de rotation et $\underline{A}$ le diamètre de l'arbre, les autres facteurs ayant déjà été définis.

La température du joint tournant ne peut être stabilisée que si les calories ainsi produites sont évacuées.

Une très faible quantité l'est par conduction et radiation, le reste devant être évacué par le débit de fuite D.

D'autre part l'énergie G que doit dépenser la source pour maintenir la pression en dépit de la fuite dans le joint est fonction de la pression maximum de la pompe Pp et du débit total de fuite D :
G = f(Pp.D).

En conclusion, on doit trouver un compromis pour le débit D qui doit être important pour évacuer les calories du joint tournant, et faible pour limiter l'énergie dissipée par la pompe.

Ce compromis est atteint dans la mesure où la plage de variation de la pression d'alimentation du joint tournant est réduite, actuellement de 1 à 3 (1 à 3 MPa). Or dans de nombreux cas, l'utilisateur désirerait faire varier la pression d'alimentation dans un rapport de 1 à 10, ce qui permettrait une meilleure adaptation de la pression exercée sur la pièce à la nature du travail effectué.

Le débit D et l'énergie G dépensée par la source varient dans les mêmes proportions. D'autre part la température du joint atteindra des valeurs inacceptables dès que le débit de fuite diminuera par suite d'une pression d'alimentation trop basse. C'est ce qui explique la limitation vers le bas des pressions d'alimentation et la mauvaise adaptation des pressions de serrage aux pièces fragiles.

L'invention a pour but de maintenir un débit de fuite suffisant, pour évacuer les calories produites, et cela quelle que soit la variation de la pression d'alimentation, en faisant varier le jeu E existant entre l'arbre tournant et l'anneau statique d'une manière inverse à la pression d'alimentation.

On atteint ce but de l'invention, ainsi que d'autres qui apparaîtront dans la suite, avec un joint hydraulique tournant annulaire à température stabilisée destinée à véhiculer un fluide sous pression entre une source fixe et un récepteur tournant, ledit joint comportant un arbre, fixé au récepteur, sur la surface duquel débouchent les canalisations d'alimentation en fluide, deux roulements fixés sur l'arbre, de part et d'autre des ouvertures des canalisations, un manchon statique monté sur les roulements et portant les entrée et sortie de fluide, des moyens d'étanchéité pour le passage du fluide du manchon à l'arbre tournant, caractérisé en ce qu'il comprend un dispositif de réglage d'un passage de fuite pour le fluide entrant, ce passage étant délimité d'une part, par une surface conique formée sur une bague mobile axialement et présentant des gorges radiales en regard des ouvertures des canalisations de l'arbre tournant et, d'autre part, une autre surface conique formée sur l'arbre, le dispositif comprenant en outre des moyens de déplacement axial de la bague qui comportent des chambres axiales prévues dans la périphérie de la bague et communiquant avec au moins une gorge radiale, au moins un poussoir, coulissant dans chaque chambre et susceptible de coopérer avec une des bagues de butée des roulements pour déplacer la bague par rapport à la surface conique de l'arbre sous l'action de la pression du fluide entrant et contre l'action d'éléments élastiques disposés entre la bague et l'autre bague de butée des roulements.

Suivant un autre mode de réalisation de l'invention, les moyens de déplacement axial de la bague sont constitués par un dispositif à excentrique solidaire du manchon et comportant un axe tournant dont l'extrémité porte un téton excentré coopérant avec la bague mobile.

Les explications et figures données ci-après à titre d'exemples, permettront de comprendre comment l'invention peut être réalisée.

Les figures 1 et 2 sont des vues en coupe longitudinale d'un premier exemple de réalisation d'un joint tournant, selon l'invention, dans deux conditions extrêmes de fonctionnement.

La figure 3 est une vue en coupe longitudinale d'un deuxième exemple de réalisation d'un joint tournant.

La figure 4 est une vue en coupe longitudinale d'un troisième exemple de réalisation d'un joint tournant en position repos avec jeu maximum.

La figure 5 est une vue en coupe longitudinale d'un quatrième exemple de réalisation d'un joint tournant selon l'invention.

La figure 6 est une vue en coupe selon VI-VI de la figure 1 ou 2.

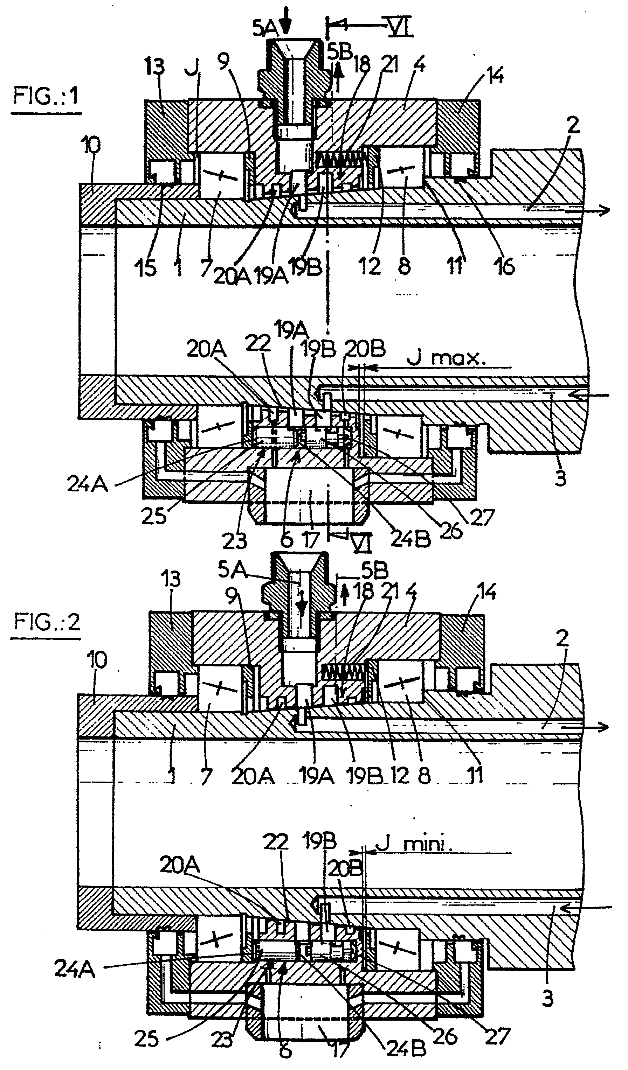

Le joint tournant, selon l'exemple de réalisation représenté sur les figures 1, 2, 3 et 6, est constitué d'un arbre creux 1 tournant, portant des canalisations 2, 3 d'alimentation en fluide des dispositifs tournants à commander, d'un manchon 4 statique, coaxial à l'arbre, muni de raccords d'entrée 5A et de sortie 5B pour son raccordement à la source fixe de fluide sous pression, l'entrée et la sortie étant interchangeables et comportant des moyens d'étanchéité hydraulique pour le passage du fluide du manchon à l'arbre tournant, lesdits moyens déterminant un passage de fuite du fluide et d'un dispositif de réglage 6 du passage de fuite du fluide.

L'arbre 1 porte deux roulements 7, 8 qui centrent le manchon 4. Le roulement 7 disposé près de l'extrémité de l'arbre est maintenu entre une bague de butée 9 et une douille 10 fixée à l'extrémité de l'arbre.

L'autre roulement 8 est maintenu contre un épaulement 11, prévu dans l'arbre, par une bague de butée 12.

Les couvercles 13, 14 assurent avec les portées 15, 16 l'étanchéité des roulements.

Le dispositif de réglage 6 du passage de fluide est constitué d'une bague mobile axialement 18, intérieure au manchon 4, solidaire de celui-ci, présentant sur sa face interne deux gorges radiales 19A et 19B, communiquant respectivement avec l'entrée 5A et la sortie 5B, les gorges étant disposées dans la partie centrale de la bague 18, en regard des orifices des canalisations 2 et 3 de l'arbre tournant et deux gorges 20A, 20B d'extrémité, disposées de part et d'autre des gorges centrales. Le dispositif comporte en outre des moyens de déplacement axial de la bague 18.

Selon l'exemple de réalisation du dispositif de réglage 6 montré sur les figures 1 et 2, la surface interne de la bague 18 dans laquelle sont prévues les gorges, est conique et coopère avec une partie conique correspondante 22 prévue sur l'arbre. Le manchon 4 solidaire de la bague mobile 18 est susceptible de se déplacer axialement par rapport à l'arbre. Sa course est limitée par le déplacement possible du roulement 7 entre la butée 9 et le couvercle 13. La figure 1 représente le dispositif de réglage dans la position de repos pour laquelle le jeu E entre l'arbre et la bague mobile 18 est maximal. Cette position est déterminée par une partie des moyens de déplacement axial qui, dans cet exemple, sont constitués d'éléments élastiques 21 tels que des ressorts hélicoïdaux qui prennent appui sur la bague de butée 12 du roulement 8 pour repousser la bague mobile 18 contre la bague de butée 9 du roulement 7. Par suite de la conicité de la bague mobile 18 et de la partie 22 de l'arbre, les surfaces en regard s'écartent et laissent entre elle le jeu maximal prévu.

Lorsque l'on alimente le joint tournant avec un fluide hydraulique par l'intermédiaire de l'orifice 5A, la sortie se faisant par l'orifice 5B, le fluide circule dans le manchon, pénètre dans la gorge 19A et se trouve en regard de l'orifice de la canalisation 2. La rotation de l'arbre 1 n'empêche pas l'alimentation de la canalisation 2. Lorsque la pression du fluide augmente, une fuite de fluide s'établit entre la bague mobile 18 et l'arbre 1 et le fluide s'écoule de la gorge 19A vers les gorges 19B et 20A et de là retourne vers la source (non représentée) par l'orifice 5B et par l'orifice de drainage 17.

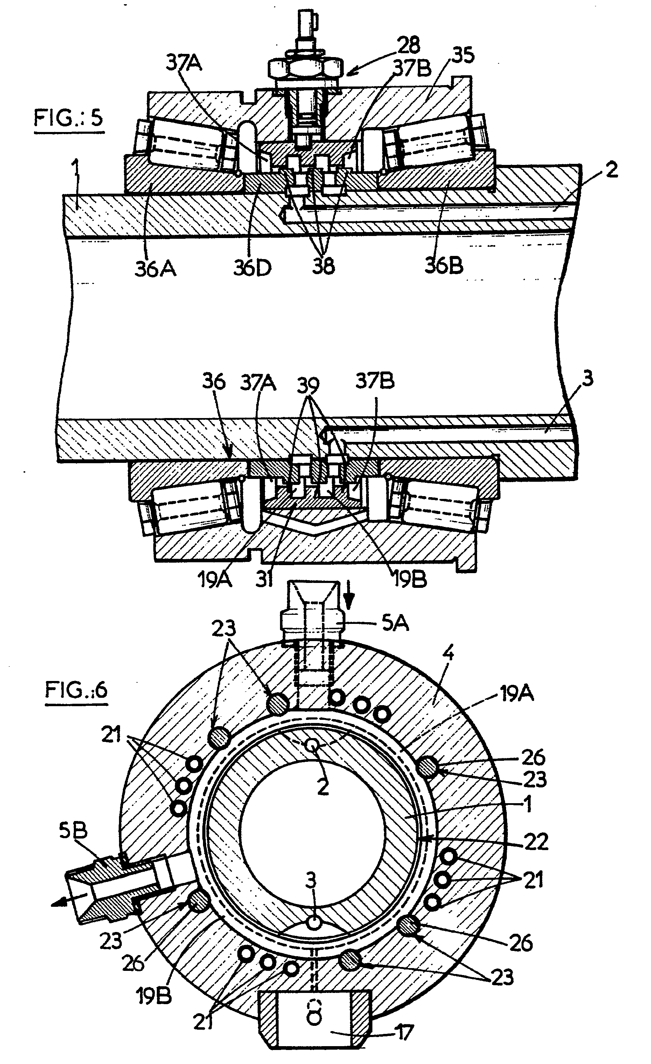

La gorge 19A est en communication de place en place avec des chambres périphériques 23 (figure 6) axiales, prévues dans la bague mobile 18 solidaire du manchon 4. Ces chambres débouchent face à la bague de butée 9 du roulement 7 et comportent au moins un poussoir 25 susceptible de coulisser dans ladite chambre qui, en position de repos, a une de ses faces d'extrémité 24A à fleur de la face radiale correspondante de la bague, l'autre face d'extrémité 24B étant devant la gorge 19A.

Les chambres 23 et leurs poussoirs 25 constituent l'autre partie des moyens de déplacement axial de la bague mobile 18 et ont une action contraire sur le déplacement de la bague à celle de la première partie constituée par les ressorts 21.

La face 24B, en communication avec la gorge 19A est soumise à la pression du fluide. Tant que la pression exercée par le fluide contre les poussoirs reste inférieure à la force exercée par les ressorts, la bague mobile 18 rests dans la position de repos. Lorsque la pression dépasse une valeur déterminée (figure 2) l'effort des poussoirs dépasse celui des ressorts, et la bague 18 se déplace en entraînant le manchon 4 qui coulisse sur les bagues extérieures des roulements 7, 8. La course est limitée, dans l'exemple de réalisation à 2 mm, correspondant à l'arrêt en butée du roulement 7 contre le couvercle 13. Le jeu axial, J, qui détermine le jeu radial E et par conséquent le passage de fuite du fluide, est volontairement limité afin d'éliminer le risque de surcharge des roulements et d'empêcher la suppression complète du jeu E entre la bague mobile et l'arbre et par conséquent, l'arrêt de la fuite de fluide. Le jeu radial E minimal est réglé de manière qu'à la pression maximale d'utilisation, il y ait une circulation de fluide suffisante pour le refroidissement du joint.

Pour des pressions de fluide intermédiaire, la bague mobile 18 peut prendre une position intermédiaire correspondant à un jeu radial intermédiaire.

On réalise ainsi un joint tournant dont le jeu s'ajuste automatiquement en fonction de la pression et inversement à celle-ci, à une basse pression correspond un grand jeu et inversement à une grande pression, un petit jeu. En conditionnant correctement la variation du jeu, c'est-à-dire l'effort des ressorts à celui des poussoirs soumis à la pression, on peut obtenir un débit de fuite constant entre deux limites quelle que soit la pression.

Les calories produites à haute vitesse seront ainsi évacuées de la même façon à haute ou basse pression. Dans les joints tournants actuels, les calories s'évacuent mal à basse pression et ne peuvent par suite être utilisés dans ces conditions, sans risque de grippage dû aux dilatations thermiques.

Dans l'exemple de réalisation représenté figures 1 et 2, comme il a été précédemment signalé, le sens de passage du fluide dans les canalisations 2 et 3 peut être inversé. Dans ce cas, le fluide passe par la gorge 19B pour alimenter par la canalisation 3, le dispositif d'actionnement hydraulique de l'outil. Il est alors nécessaire de prévoir un deuxième poussoir 26 dans les chambres périphériques 23. Une des faces radiales du poussoir forme une paroi auxiliaire contre laquelle s'appuie, en position de repos, la face 24B du poussoir 25 et qui délimitera la chambre dans laquelle agira le fluide introduit par la gorge 19A. L'autre face radiale du poussoir 26 s'appuie contre le fond de la chambre et présente des rainures longitudinales 27 débouchant dans une rainure périphérique prévue dans le poussoir et disposée en face d'une ouverture faisant communiquer la chamber 23 avec la canalisation 19B.

Le fluide passant par la rainure 19B vient remplir l'espace entre le fond de la chambre et la face correspondante du poussoir 26 et pousse le deuxième poussoir 26 contre le premier poussoir 25 qui vient appuyer contre la bague de butée 9. Le mode de fonctionnement du dispositif de réglage est en tout point semblable à celui précédemment décrit.

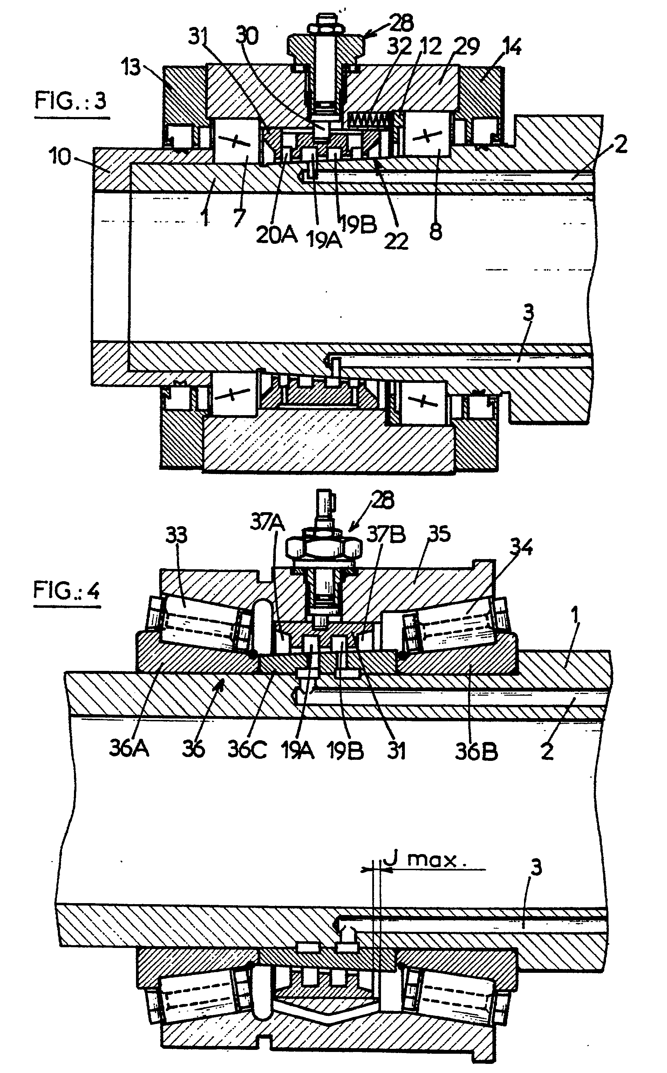

Selon un troisième exemple de réalisation montré sur la figure 3, les poussoirs et les ressorts, constituant les moyens de déplacement axial, sont remplacés par un dispositif à excentrique 28, commandé manuellement ou automatiquement. Ce dispositif est monté dans le manchon 29 et comporte un axe tournant dont l'extrémité porte un téton excentré 30 coopérant avec la bague mobile 31. Dans cette réalisation, le manchon 29 est fixe et seule la bague est mobile axialement.

Les ressorts 32 ont pour seule fonction d'appliquer au roulement 8 une précharge. Les positions de la bague mobile sont déterminées par rotation de l'axe du dispositif à excentrique 28. Cette rotation peut être obtenue par un moteur pas à pas en fonction de divers paramètres (température, vitesse, pression etc.) du joint et du fluide intégrés dans un microprocesseur.

Selon une quatrième forme de réalisation, le joint hydraulique représenté sur la figure 4, est formé dans un roulement distributeur comportant deux rangées de rouleaux coniques 33 et 34 maintenus entre une bague extérieure 35 et une bague intérieure 36.

La bague intérieure comporte trois parties 36A, 36B et 36C. La partie centrale 36C présente une surface extérieure conique et a la même fonction que la partie conique 22 de l'arbre des exemples précédents. Cette partie s'ajuste avec précision sur l'arbre 1 portant les canalisations 2 et 3 de passage du fluide hydraulique et présente des passages communiquant avec des gorges 19A, 19B prévues dans une bague mobile 31 logée entre les cages des rouleaux 33 et 34. La face de la bague mobile en regard de la bague conique centrale 36C présente une surface conique conjuguée de celle-ci. Les gorges d'extrémité 20A et 20B prévues dans la réalisation selon les figures 1, 2 et 3 sont remplacées par des évidements 37A et 37B prévus dans les extrémités de la bague mobile 31. Le fluide de fuite, passant dans les volumes définis par les évidements 37A, 37B et les rangées de rouleaux, participe à la lubrification du roulement puis est évacué vers la source de fluide hydraulique.

La bague extérieure 35 du roulement joue le rôle du manchon fixe 29 et est équipée d'un dispositif à excentrique 28 dont le fonctionnement est identique à celui du dispositif à excentrique de l'exemple précédent.

Le cinquième exemple de réalisation de joint hydraulique, représenté figure 5, concerne également un roulement distributeur à deux rangées de rouleaux coniques dans lequel la partie centrale 36D, comprise entre les parties 36A et 36B de la bague intérieure 36, présente une surface extérieure cylindrique dans laquelle sont prévus trois collets 38 entre lesquels débouchent les orifices communiquant avec les canalisations 2 et 3 de l'arbre 1.

Les gorges 19A, 19B et les évidements 37A et 37B des extrémités de la bague mobile 31 forment aussi à la surface de la bague des collets 39 susceptibles de recouvrir au moins partiellement les collets 38 de la partie centrale 36D.

Un dispositif à excentrique 28, prévu dans la bague extérieure 35, coopère avec la bague mobile 31 pour la déplacer axialement.

La figure 5 montre le dispositif dans la position de repos pour laquelle le recouvrement des collets 39 par les collets 38 de la bague mobile est minimum et offre au fluide un parcours de fuite de petite longueur, n'opposant qu'un faible freinage et permettant un débit appréciable. L'augmentation du recouvrement amène une augmentation du freinage du fluide de fuite et une diminution du débit de fuite, de la même manière que dans les réalisations à jeu radial obtenu par déplacement axial de deux parties coniques conjuguées.

Il est à remarquer que dans les réalisations faisant varier la longueur de fuite L par déplacement axial, la valeur du jeu radial E reste fixe comme le montrent les formules. Cette variation a moins d'influence sur le débit de fuite que lorsque le jeu E varie puisque celui-ci agit à la troisième puissance sur le débit, alors qu'il est inversement proportionnel à la longueur L entre deux gorges. Par contre la variation de la longueur L influence la quantité de calories à évacuer.

Selon une forme de réalisation non représentée mais découlant directement des exemples ci-dessus décrits, la partie centrale conique 36C (figure 4) porte des collets dont les surfaces coniques sont conjuguées de celles des collets de la bague mobile 31.

## Revendications

1. Joint hydraulique tournant annulaire à température stabilisée destinée à véhiculer un fluide sous pression entre une source fixe et un récepteur tournant, ledit joint comportant un arbre, fixé au récepteur, sur la surface duquel débouchent les canalisations d'alimentation en fluide, deux roulements fixés sur l'arbre, de part et d'autre des ouvertures des canalisations, un manchon statique monté sur les roulements et portant les entrée et sortie de fluide, des moyens d'étanchéité pour le passage du fluide du manchon à l'arbre tournant, comportant un dispositif de réglage du passage de fuite formé d'une bague, mobile axialement, présentant des gorges en regard des orifices des canalisations de l'arbre tournant et des moyens de déplacement axial de la bague, caractérisé en ce que lesdits moyens de déplacement comportent des chambres axiales (23) prévues dans la périphérie de la bague et communiquant avec au moins une gorge radiale (19A, 19B), au moins un poussoir (25), coulissant dans chaque chambre, susceptible de coopérer avec une des bagues de butée (9, 12) des roulements (7, 8) pour déplacer la bague contre l'action d'éléments élastiques (21) disposés entre la bague et l'autre bague de butée (12, 9) des roulements (8, 7).

2. Joint selon la revendication 1, caractérisé en ce que la bague mobile (18) est solidaire du manchon (4), ledit manchon étant susceptible de coulisser axialement sur les bagues extérieures des roulements (7, 8).

3. Joint selon la revendication 1 ou 2, caractérisé en ce que les chambres périphériques (23) comportent un deuxième poussoir (26), contre lequel s'appuie le premier poussoir (25), ledit deuxième poussoir (26) présentant une rainure périphérique communiquant avec la deuxième gorge radiale (19B) et des rainures longitudinales pour amener le fluide hydraulique à agir contre une face dudit deuxième poussoir pour le déplacer axialement en poussant ledit premier poussoir, ledit deuxième poussoir étant actionné lorsque la deuxième gorge radiale (19B) reçoit le fluide hydraulique entrant.

4. Joint hydraulique tournant annulaire à température stabilisée destinée à véhiculer un fluide sous pression entre une source fixe et un récepteur tournant, ledit joint comportant un arbre, fixé au récepteur, sur la surface duquel débouchent les canalisations d'alimentation en fluide, deux roulements fixés sur l'arbre, de part et d'autre des ouvertures des canalisations, un manchon statique monté sur les roulements et portant les entrée et sortie de fluide, des moyens d'étanchéité pour le passage du fluide du manchon à l'arbre tournant, comportant un dispositif de réglage du passage de fuite formé d'une bague, mobile axialement, présentant des gorges en regard des orifices des canalisations de l'arbre tournant et des moyens de déplacement axial de la bague, caractérisé en ce que lesdits moyens de déplacement sont constitués par un dispositif à excentrique (28), solidaire du manchon (29), comportant un axe tournant dont l'extrémité porte un téton excentré (30) coopérant avec la bague mobile (31).

5. Joint selon l'une des revendications précédentes, caractérisé en ce que les gorges radiales (19A, 19B) prévues dans la bague mobile (31) sont séparées par des collets (39) conjugués de collets (38) prévus sur l'arbre, séparant les orifices communiquant avec les canalisations (2, 3) de l'arbre (1), les collets (39) de la bague mobile étant susceptibles de recouvrir au moins partiellement les collets (38) de l'arbre (1) pour modifier le parcours de fuite du fluide.

6. Joint selon les revendications 1 et 5, caractérisé en ce que les collets (38) prévus sur l'arbre, sont usinés dans la partie centrale de la bague intérieure d'un roulement distributeur, le manchon (35) étant constitué par la bague extérieure dudit roulement.

## Claims

1. Annular rotating hydraulic joint of stabilized temperature, intended for conveying a pressurized fluid between a stationary source and a rotating receiver, the said joint comprising a shaft which is fastened to the receiver and on the surface of which open out the fluid feed ducts, two rolling bearings fastened to the shaft on either side of the orifices of the ducts, a static sleeve mounted on the bearings and carrying the fluid inlet and fluid outlet, sealing means for the passage of the fluid from the sleeve to the rotating shaft, characterized in that it comprises a device for adjusting a leakage passage, for the incoming fluid, this passage being defined on the one hand, by a conical surface formed on an axially movable ring having radial grooves (19A, 19B) opposite the orifices of the ducts of the rotating shaft and, on the other hand, another conical surface (22) formed on shaft (1), the device further comprising means for axially moving the ring (18) which comprise axial chambers (23) provided in the periphery of the ring and communicating with at least one radial groove (19A, 19B), at least one tappet (25) sliding in each chamber and capable of interacting with one of the stop rings (9, 12) of the bearings (7, 8), in order to move the ring (18) in respect of the shaft conical surface (22) counter to the action of elastic elements (21) arranged between the ring and the other stop ring (12, 9) of the bearings (8, 7).

2. Joint according to claim 1, characterized in that the movable ring (18) is integral with the sleeve (4), the said sleeve being capable of sliding axially on the outer rings of the bearings (7, 8).

3. Joint according to claim 1 or 2, characterized in that the peripheral chambers (23) have a second tappet (26), against which bears the first tappet (25), the said second tappet (26) having a peripheral slot communicating with the second radial groove (19B) and longitudinal slots for bringing the hydraulic fluid into action against one face of the said second tappet, in order to move it axially by pushing the said first tappet, the said second tappet being actuated when the second radial groove (19B) receives the incoming hydraulic fluid.

4. Annular rotating hydraulic joint of stabilized temperature, intended for conveying a pressurized fluid between a stationary source and a rotating receiver, the said joint comprising a shaft which is fastened to the receiver and on the surface of which open out the fluid feed ducts, two rolling bearings fastened to the shafts on either side of the orifices of the ducts, a static sleeve mounted on the bearings and carrying the fluid inlet and fluid outlet, sealing means for the passage of fluid from the sleeve to the rotating shaft, characterized in that it comprises a device for adjusting a leakage passage for the incoming fluid, this passage being formed, on the one hand, by a conical surface formed on an axially movable ring (31) having grooves (19A, 19B) opposite the orifices of the ducts of the rotating shaft (1) and, on the other hand, another conical surface (22) formed on shaft (1), the device further comprising means for axially moving the ring made of an eccentric device (28) fixed to the sleeve (29) and having a rotating pin, the end of which cam is an offset stud (30) interacting with the movable ring (31).

5. Joint according to one of the preceding claims, characterized in that the radial grooves (19A, 19B) made in the movable ring (31) are separated by means of collars (39) matching collars (38) provided on the shaft and separating the orifices communicating with the ducts (2, 3) of the shaft (1), the collars (39) of the movable ring being capable of overlapping the collars (38) of the shaft (1) at least partially, in order to modify the fluid leakage path.

6. Joint according to claims 1 and 5, characterized in that the collars (38) provided on the shaft are machined in the central part of the inner ring of a distributor bearing, the sleeve (35) consisting of the outer ring of the said bearing.

**Patentansprüche**

1. Hydraulische Drehdurchführung mit Stabilisierung der Temperatur, um ein unter Druck stehendes Fluid zwischen einer feststehenden Quelle und einem umlaufenden Abnehmer zu transportieren, wobei die Durchführung aufweist: eine auf dem Abnehmer befestigte Welle, an deren Oberfläche die Fluid-Zuführleitungen münden; zwei auf der Welle beiderseits der Zuführungsleitungs-Mündungen angebrachte Lager; eine auf den Lagern montierte ruhende Hülse, welche Einlaß und Auslaß für das Fluid trägt; und Abdichtungsmittel für den Fluid-Übergang von der Hülse an die umlaufende Welle, dadurch gekennzeichnet, daß die Durchführung eine Regeleinrichtung für einen Leckage-Ablauf des einströmenden Fluids aufweist, wobei der Ablauf einerseits durch eine auf einem axialbeweglichen Ring (31) gebildete Konusfläche mit Radialnuten (19A, 19B) begrenzt ist, die den Zuführungsleitungs-Mündungen der umlaufenden Welle (1) gegenüberstehen, und andererseits durch eine weitere auf der Welle (1) ausgebildete Konusfläche (22), und daß die Durchführung ferner zur Axialverschiebung des Ringes (18) Mittel mit am Ring-Umfang angeordneten Axialkammern (23) aufweist, die mit zumindest einer Radialnut (19A, 19B) strömungsverbunden sind, sowie wenigstens einen in jeder Kammer gleitbeweglichen Stößel (25) solcher Ausbildung, daß er mit einem der Anschlagsringe (9, 12) der Lager (7, 8) zusammenwirkt, um den Ring (18) relativ zu der Konusfläche (22) der Welle unter der Wirkung des Fluiddrucks und entgegen der Wirkung von elastischen Elementen (21) zu verschieben, die zwischen dem Ring (18) und dem anderen Anschlagring (12, 9) der Lager (8, 7) angeordnet sind.

2. Durchführung nach Anspruch 1, dadurch gekennzeichnet, daß der bewegliche Ring (18) mit der Hülse (4) einstückig bzw. starr verbunden ist, wobei die Hülse auf den Außenringen der Lager (7, 8) axial gleitbeweglich ist.

3. Durchführung nach Anspruch 1 oder 2, dadurch gekennzeichnet, daß die Umfangs-Kammern (23) einen zweiten Stößel (26) aufweisen, an welchem sich der erste Stößel (25) abstützt und welcher eine mit der zweiten Radialnut (19B) strömungsverbundene Umfangsnut sowie Längsnuten hat, um Druckmittel zur Einwirkung auf eine Fläche des zweiten Stößels heranzuführen, so daß er zum Stoß auf den ersten Stößel axialverschoben wird, wobei der zweite Stößel betätigt wird, sobald die zweite Radialnut (19B) das eintretende Druckmittel erhält.

4. Hydraulische Drehdurchführung mit Stabilisierung der Temperatur, um ein unter Druck stehendes Fluid zwischen einer feststehenden Quelle und einem umlaufenden Abnehmer zu transportieren, wobei die Durchführung aufweist: eine auf dem Abnehmer befestigte Welle, an deren Oberfläche die Fluid-Zuführleitungen münden; zwei auf der Welle beiderseits der Zuführleitungs-Mündungen angebrachte Lager; eine auf den Lagern montierte ruhende Hülse, welche Einlaß und Auslaß für das Fluid trägt; und Abdichtungsmittel für den Fluid-Übergang von der Hülse an die umlaufende Welle, dadurch gekennzeichnet, daß die Durchführung eine Regeleinrichtung für einen Leckage-Ablauf des einströmenden Fluids aufweist, wobei der Ablauf einerseits durch eine auf einem axialbeweglichen Ring (31) gebildete Konusfläche mit Radialnuten (19A, 19B) begrenzt ist, die den Zuführleitungs-Mündungen der umlaufenden Welle (1) gegenüberstehen, und andererseits durch eine weitere auf der Welle (1) ausgebildete Konusfläche (22), und daß die Durchführung ferner zur Axialverschiebung des Ringes (18) Mittel besitzt, die einen mit der Hülse (29) einstückigen bzw. starr verbundenen Exzenter (28) mit einer umlaufenden Welle aufweisen, deren Ende einen exzentrischen Ansatz (30) trägt, welcher mit dem beweglichen Ring (31) zusammenwirkt.

5. Durchführung nach einem der vorhergehenden Ansprüche, dadurch gekennzeichnet, daß die in dem beweglichen Ring (31) vorgesehenen Radialnuten (19A, 19B) durch Flanschringe (39) getrennt sind, denen auf der Welle vorgesehene Flanschringe (38) zugeordnet sind, welche mit den Zuführleitungen (2, 3) der Welle (1) strömungsverbunden sind, wobei die Flanschringe (39) des beweglichen Ringes zum wenigstens teilweisen Übergreifen der Flanschringe (38) der Welle (1) ausgebildet sind, um die Leckage-Strecke des Fluids zu verändern.

6. Durchführung nach Anspruch 1 und 5, dadurch gekennzeichnet, daß die auf der Welle (1) vorgesehenen Flanschringe (38) in den Mittelabschnitt des Innenringes eines Verteiler-Lagers eingearbeitet sind, wobei die Hülse (35) vom dem Außenring dieses Lagers gebildet ist.

FIG.:1

FIG.:2

FIG.: 3

FIG.: 4

FIG.: 5

37A

28

37B

35

1

2

36A

36D

38

36B

36

37A

39

37B

3

19A

31

19B

5A

FIG.:6

23

4

19A

21

26

23

2

5B

1

22

23

3

21

26

23

19B

26

21

17